# EUROPEAN PATENT SPECIFICATION

(11) **EP 0 471 999 B1**
(45) Date of publication and mention of the grant of the patent: **05.03.1997**
(21) Application number: 91112445.1
(22) Date of filing: 24.07.1991
(51) Int. Cl.: C08F 297/04, C08F 8/04

(54) **Branched and hydrogenated block copolymer and process for its preparation**
Hydriertes und verzweigtes Blockcopolymer und Verfahren zur Herstellung
Copolymère bloc hydrogéné et ramifié et son procédé de préparation

(30) Priority: 25.07.1990 IT 2104290
(43) Date of publication of application: 26.02.1992
(73) Proprietor: ENICHEM ELASTOMERI S.r.l., I-20124 Milan (IT)
(72) Inventor: Custro, Sergio, I-48100 Ravenna (IT); Viola, Gian Tommaso, I-48015 Cervia, Ravenna (IT)
(74) Representative: Weinhold, Peter, Dr.

(56) References cited:
- GB-A- 2 061 961
- GB-A- 2 225 330
- US-A- 3 670 054
- US-A- 4 291 139
- US-A- 4 874 821
- WORLD PATENTS INDEX LATEST Derwent Publications Ltd., London, GB; AN 87-139969 & JP-A-62 079 211

## Description

The present invention relates to branched and hydrogenated block copolymers and the process for the preparation thereof.

The anionic polymerization of dienic and vinylaromatic monomers in the presence of metal-alkyl and/or metal-aryl catalysts, resulting in so-called "living polymers", is a well-known technique and is described, e.g., by M.Schwarc in "Carbanions, Living Polymers and El. Transfer Processes", Interscience Publishers, J.Wiley and Sons, New York, 1956.

With this living polymer technique it is possible, in particular, to prepare both linear and branched block copolymers, especially block copolymers of polybutadiene and polystyrene such as, for example, those described in US-A-3,078,254, 3,244,644, 3,265,765, 3,280,084, 3,594,452, 3,766,301 and 3,937,760.

These block copolymers are widely used, for example, in the fields of adhesives, in compositions with various plastic materials, in the shoe industry, etc.

One serious problem with these block copolymers is the difficulty of achieving a good balance of rheological characteristics, mechanical resistance and resistance to thermo-oxidation. For example, the well-known three-block copolymers of the type A-B-A (polystyrene-polybutadiene-polystyrene) normally show satisfactory mechanical characteristics but poor thermo-oxidation resistance. In addition, their rather high viscosity, both in the molten state and in solution, creates problems in the processing and transformation thereof. On the other hand, the known four-block (AB)₂ linear copolymers, containing similar polybutadiene blocks, generally have good rheological but poor mechanical properties. Similar considerations apply for linear multiblock (AB)ₙ copolymers, where n is an integer of higher than 2 and can reach a value of about 10.

US-A-4,874,821 describes a linear copolymer with four alternating blocks, B₁-A₁-B₂-A₂, having defined proportions of blocks and also containing, between blocks B₁ and A₁, a copolymeric random sequence formed by dienic and vinylaromatic monomer units. This kind of block copolymer is particularly suitable for use in adhesive formulations having good cohesion characteristics and thermo-oxidation stability.

GB-A-2 061 961 discloses the catalytic hydrogenation of, inter alia, radial or star-shaped block copolymers of the formula [B-(A-B)ₚ-]_{q}X wherein blocks A mainly consist of a vinyl-substituted aromatic hydrocarbon and B of a conjugated diene and X may be silicon.

JP-A-62 079211 describes the hydrogenation of block copolymers of the type (B-A-B)₄Si wherein A is an aromatic vinyl polymer block and B is a conjugated diene polymer block.

EP-A-0 058 952 relates to block copolymers which may have the general formula [(B-A)ₙ-B]ₘ₊₂-X wherein A is an aromatic vinyl hydrocarbon polymer block, B a polymer block of conjugated diene, X is a coupling radical and n and m are of from 1 to 10.

In copending European patent application of the applicant which claims the priority of Italian patent application 21041A/90, filed on 25 July 1990, and entitled "Branched block copolymer, process for its preparation and use thereof" there is described a block copolymer of general formula (B₁-T-A-B₂)ₙX where B₁ and B₂ are polydienic blocks; A is a polyvinylaromatic block; T is a random copolymeric segment formed by dienic and vinylaromatic monomer units; X is a coupling radical of valence n, and n is an integer of from 3 to 20. This type of block copolymer has many potential applications and is used in accordance with its composition. In particular, copolymers with a high content of vinylaromatic monomer show excellent transparency as well as a high shock-resistance. Therefore these copolymers can be used either as such or in admixture with common thermoplastic polymers, for example polystyrene, to afford manufactured articles which can be used, e.g., in the food packaging industry. Moreover, copolymers having a low content of vinylaromatic monomer units and a weight ratio of blocks B₂ to blocks B₁ close to unity, can be combined with oils and asphaltic resins to give adhesive formulations with good adhesion and cohesion characteristics.

Furthermore, copolymers having an A block content of about 30 to 40% by weight and a weight ratio of blocks B₂ to blocks B₁ of about 10/1, when mixed with bitumen, afford manufactured articles showing good resistance to high and low temperatures.

It was found that by hydrogenating the diene units of the above copolymer of formula (B₁-T-A-B₂)ₙX, it is possible to obtain a further and unexpected improvement of some characteristics thereof, particularly the mechanical properties and the resistance to thermo-oxidation and to atmospheric agents.

In accordance with the above, the present invention provides a branched and hydrogenated block copolymer of general formula (I):${\text{[(EB)}}_{\text{1}} {\text{-HT-A-(EB)}}_{\text{2}} {\text{]}}_{\text{n}} \text{X}$ wherein
(EB)₁ and (EB)₂ are hydrogenated polydiene blocks (preferably blocks derived from one or more dienes having 4 to 12 carbon atoms, such as butadiene and isoprene);
A is a polyvinylaromatic block (preferably a block derived from one or more vinylaromatic monomers having 8 to 20 (e.g. 8 to 12) carbon atoms and optionally containing halogen atoms, such as styrene, α-methylstyrene and chloro-substituted derivatives thereof);
HT is a random copolymer segment formed by hydrogenated dienic and vinylaromatic monomer units;
X is a tri- or tetravalent coupling radical derived from a tri- or tetrachloro derivative of silicon, tin and germanium; and
n is an integer of from 3 to 4 ;
the above copolymer having a weight average molecular weight of from 60,000 to 500,000 (preferably 100,000 to 350,000); an A block content of from 20 to 80% by weight of the total copolymer; an [(EB)₁+ (EB)₂] block content of from 20 to 80% by weight; a weight ratio of blocks (EB)₁ to blocks (EB)₂ of from 0.1 to 1.0; and a HT segment content of from 5 to 40% by weight.

In the present invention, "branched and hydrogenated block copolymer" means that the degree of hydrogenation of the diene units in the copolymer is preferably at least equal to 80%, and particularly ranges from 95 to 100%. In the present invention, preferably the weight ratio in the branched and hydrogenated block copolymer of blocks (EB)₁ to blocks (EB)₂ (which may be derived from the same or different diene(s) and are preferably formed by the same diene(s)) varies from 0.2 to 0.5.

It is most preferred that in the branched and hydrogenated block copolymer (I) block A is a polystyrene block and blocks (EB)₁ and (EB)₂ are hydrogenated polybutadiene blocks, the segment HT is a random copolymer of hydrogenated butadiene units and styrene units in quantities preferably ranging from 10 to 30% by weight of the copolymer, n is 3 or 4 and X represents =Si= or CH₃Si≡.

The branched and hydrogenated block copolymer of the present invention can be used particularly in those fields of application where the maximum level of mechanical characteristics such as shock resistance as well as stability to thermooxidation and resistance to atmospheric agents is required. In particular, said copolymer is suitable for use in combination with bitumen for special applications, in adhesive formulations, in the production of manufactured articles which have to satisfy certain aesthetical requirements and in compositions with polyolefins (e.g. polyethylene, polypropylene and polystyrene) for applications in the car industry.

The present invention also comprises processes for the production of the branched and hydrogenated block copolymer of general formula (I).

More specifically, the process for the preparation of the block copolymer (I) comprises the following successive steps:
(a) Polymerization, by means of the living polymer technique, of a mixture of predetermined quantities of diolefin and vinylaromatic monomers until a complete, or almost complete, conversion of the monomers is achieved. Thus, a living copolymer of the type B₁-T-A is obtained.
(b) Addition of a predetermined amount of diene monomer to the copolymer obtained in step (a) and polymerization until a complete, or almost complete, conversion of the added diene monomer is achieved. Thus, a living copolymer of the type B₁-T-A-B₂ is obtained.
(c) Coupling of the living polymeric chains obtained in step (b) by means of a polyfunctional coupling agent. Thereby the branched block copolymer of formula (B₁-T-A-B₂)ₙX is obtained.
(d) Hydrogenation of the diene units of the copolymer obtained in step (c) by means of catalytic hydrogenation. The branched and hydrogenated block copolymer (I) having the copolymeric segment HT, [(EB)₁-HT-A-(EB)₂]ₙX, is thus obtained.
(e) Recovery of the branched and hydrogenated block copolymer obtained in step (d).

Using the procedure described above, it is possible to vary the composition and length of the copolymeric segment HT by adding polar compounds, such as ethers and amines, to the reaction system.

In particular, the polymerization steps are preferably carried out in an aliphatic and/or cycloaliphatic organic solvent, at temperatures ranging from 30 to 150°C and at a pressure equal to or higher than atmospheric pressure, in the presence of metal-alkyl or metal-aryl catalysts. The most preferred solvents are n-hexane and cyclohexane, while the most preferred reaction temperature ranges from 50 to 100°C and the most preferred catalyst is alkyl lithium wherein the alkyl group preferably contains from 3 to 7 (e.g. 4 to 6) carbon atoms. Said catalyst generally is used in amounts of from 0.025 to 0.20 parts by weight per 100 parts by weight of the total monomers. In the polymerization mixture, polar compounds such as ethers and amines can be present, usually at a maximum concentration of about 0.1% by weight with respect to the solvent.

In the coupling step, it is preferable to work at a temperature ranging from 110 to 125°C and in the presence of a coupling agent, selected tri- and tetrachloro derivatives of silicon, tin and germanium. From a practical point of view it is preferred to use silicon tetrachloride and/or CH₃SiCl₃ as coupling agent. The most preferred diolefin is butadiene and the most preferred vinylaromatic monomer is styrene.

In the hydrogenation step it is preferred to operate in the presence of a hydrogenation catalyst, with a hydrogen pressure of from 138 kPa to 7 MPa (20 to 1,000 psi) and at a temperature of from 30 to 200°C. Most preferred are a hydrogen pressure of from 1 to 4 MPa (150 to 600 psi) and a temperature of from 40 to 130°C. Suitable catalysts are those which are well known in the art, preferably those obtained by contact of an aluminum alkyl compound with a nickel and/or cobalt compound.

At the end of the hydrogenation reaction, the branched and hydrogenated block copolymer can be recovered from the reaction mixture, after having separated the catalytic residues, by means of conventional techniques, such as by coagulation effected by treating the polymeric solution with alcohols and/or an excess of water, containing suitable reagents for the elimination of the catalytic residues.

The following examples are intended to give a more detailed illustration of the present invention without being a limitation thereof.

### Example 1 (Comparative)

1,200 g of anhydrous cyclohexane containing 2.0 g of tetrahydrofuran and 30 g of butadiene are charged into a 2 liter reactor under stirring. The temperature of the mixture is brought to 55°c and 0.220 g of sec-butyllithium in n-hexane solution are then added. After 15 minutes of reaction the temperature of the mixture reaches 70°C and the conversion of butadiene is almost complete. 150 g of styrene are then added and after 15 minutes of reaction the temperature of the mixture reaches 80°C and the conversion of styrene is almost complete. 20 g of butadiene are then added. After 10 minutes of reaction the temperature of the mixture reaches 87°C and the conversion of the added butadiene is almost complete. 0.160 g of silicon tetrachloride, dissolved in cyclohexane, are finally added and after 5 minutes the coupling reaction of the living chains is practically complete (97% yield).

A block copolymer of the type (B₁-A-B₂)ₙX where B₁ and B₂ are butadiene blocks, A is a styrene block, X = Si and n = 4 is thus obtained, said copolymer having the following characteristics:
- MW 250,000
   (weight average molecular weight determined by GPC analysis)
- Total styrene 75 %
   (by weight on the total styrene, determined by IR analysis)
- Styrene in the blocks 75 %
   (by weight, determined by decomposition with OsO₄)

The solution of the block copolymer is transferred into a stirred 2 liter reactor, under a hydrogen atmosphere. The mass is heated to 60°C and a catalyst mixture, prepared by mixing 0.109 g of nickel acetylacetonate with 0.19 g of aluminum triethyl in 20 ml of cyclohexane, is then added.

The hydrogenation reaction is carried out at 500 psi of hydrogen over a period of 3.5 hours. After this time, the hydrogenation of the butadiene units, determined by means of iodine titration, is equal to 98.8%.

The catalyst residues are separated by extraction with diluted hydrochloric acid, followed by washing with water. Upon completion of the washing, 0.2 g of 2,6-di-tert-butyl-4-methylphenol are added to the hydrogenated copolymer in cyclohexane solution. The hydrogenated copolymer is recovered by means of coagulation with a mixture of methyl alcohol and ethanol, and is then dried in a vacuum oven at 60°C for 18 hours.

### Example 2

1,200 g of anhydrous cyclohexane containing 16 g of butadiene and 92 g of styrene are charged into a 2 liter reactor under stirring. The temperature of the mixture is brought to 50°C and 0.3 g of sec-butyllithium in n-hexane solution are then added. After 30 minutes of reaction the temperature of the mixture reaches 58°C and the conversion of the monomers is almost complete. 92 g of butadiene are then added and after 10 minutes of reaction the temperature of the mixture reaches 82°C and the conversion of butadiene is almost complete. 0.15 g of CH₃SiCl₃, dissolved in cyclohexane, are finally added and after 5 minutes the coupling reaction of the living chains is practically complete (97.5% yield).

A block copolymer of the type (B₁-T-A-B₂)ₙX where B₁ and B₂ are butadiene blocks, A is a styrene block, X = CH₃Si and n = 3 is thus obtained, said copolymer having the following characteristics:
- MW 98,000
- Total styrene 46 %
- Styrene in the blocks 40 %

The solution of the block copolymer is transferred into a stirred 2 liter reactor, under a hydrogen atmosphere. The mixture is heated to 60°C and a catalyst, prepared by mixing 0.2 g of nickel 2-ethylhexanoate and 0.25 g of aluminum triisobutyl in 20 ml of cyclohexane, is then added. The hydrogenation reaction is carried out at 600 psi of hydrogen over a period of 4.0 hours. After this period of time, the hydrogenation of the butadiene units, determined by means of iodine titration, is equal to 98.5%.

The catalyst residues are separated by extraction with diluted sulphuric acid, followed by washing with water. Upon completion of the washing, 0.2 g of 2,6-di-tert-butyl-4-methylphenol were added to the hydrogenated copolymer in cyclohexane solution. The hydrogenated copolymer is recovered by means of coagulation with a mixture of methanol and ethanol, and is then dried in a vacuum oven at 60°C over a period of 18 hours.

## Claims (Claims for the following Contracting State(s): AT, BE, CH, LI, DE, DK, FR, GB, GR, IT, LU, NL, SE)

1. Branched and hydrogenated block copolymer of general formula (I):${\text{[(EB)}}_{\text{1}} {\text{-HT-A-(EB)}}_{\text{2}} {\text{]}}_{\text{n}} \text{X}$ wherein
(EB)₁ and (EB)₂ are hydrogenated polydiene blocks;
A is a polyvinylaromatic block;
HT is a random copolymer segment composed of hydrogenated dienic and vinylaromatic monomer units;
X is a tri- or tetravalent coupling radical derived from a tri- or tetrachloro derivative of silicon, tin and germanium; and
n is an integer of from 3 to 4;
the above copolymer having a weight average molecular weight of from 60,000 to 500,000; an A block content of from 20 to 80% by weight; a [(EB)₁+(EB)₂] block content of from 20 to 80% by weight; a weight ratio of blocks (EB)₁ to blocks (EB)₂ of from 0.1 to 1.0; and a HT segment content of from 5 to 40% by weight.

2. Copolymer according to claim 1, wherein the degree of hydrogenation of the diene units is not less than 80% and preferably ranges from 95 to 100%.

3. Copolymer according to any one of claims 1 and 2, wherein the weight ratio of blocks (EB)₁ to blocks (EB)₂ ranges from 0.2 to 0.5 and the copolymeric segment HT content ranges from 10 to 30% by weight of the total block copolymer.

4. Copolymer according to any one of claims 1 to 3, wherein block A is a polystyrene block and/or blocks (EB)₁ and (EB)₂ are hydrogenated polybutadiene blocks and/or segment HT is a random copolymer block of hydrogenated butadiene units and styrene units and/or X is =Si= or CH₃Si≡.

5. Process for the preparation of the copolymer according to any one of claims 1 to 4, comprising:
(a) polymerization, by means of the living polymer technique, of a mixture of diolefin and vinylaromatic monomer up to the complete, or almost complete, conversion of the monomers;
(b) addition of diene monomer to the copolymer obtained in step (a) and continuation of the polymerization up to the complete, or almost complete, conversion of the added diene monomer; and
(c) coupling of the living polymeric chains obtained in step (b) by means of a polyfunctional coupling agent; and
(d) hydrogenation of the diene units of the copolymer obtained in step (c) by means of catalytic hydrogenation.

6. Process according to claim 5, wherein the polymerization steps are carried out in an aliphatic or cycloaliphatic organic solvent at a temperature of from 30 to 150°C and atmospheric or superatmospheric pressure in the presence of metal-alkyl and/or metal-aryl catalysts.

7. Process according to claim 6, wherein the solvent is n-hexane and/or cyclohexane, the reaction temperature ranges from 50 to 100°C, the catalyst is a C₃-C₇-alkyl-lithium and said catalyst is used in amounts of from 0.025 to 0.20 parts by weight per 100 parts by weight of the total monomers.

8. Process according to any one of claims 5 to 7, wherein the coupling step is carried out at a temperature of from 110 to 125°C in the presence of coupling agents selected from tri- and tetra-chloro derivatives of silicon, tin and germanium, and particularly is selected from SiCl₄ and CH₃SiCl₃.

9. Process according to any one of claims 5 to 8, wherein the hydrogenation is carried out, in the presence of a hydrogenation catalyst, under a hydrogen pressure of from 138 kPa to 7 MPa (20 to 1,000 psi) and at a temperature of from 30 to 200°C.

10. Process according to claim 9, wherein the hydrogenation is carried out under a hydrogen pressure of from 1 MPa to 4 MPa (150 and 600 psi), at a temperature of from 40 to 130°C and by using a catalyst obtained by contacting an aluminum alkyl compound with a nickel and/or cobalt compound.

11. Process according to any one of claims 5 to 10, wherein the diolefin is butadiene and the vinylaromatic monomer is styrene.

## Claims (Claims for the following Contracting State(s): ES)

1. Process for the preparation of a branched and hydrogenated block copolymer of general formula (I):${\text{[(EB)}}_{\text{1}} {\text{-HT-A-(EB)}}_{\text{2}} {\text{]}}_{\text{n}} \text{X}$ wherein
(EB)₁ and (EB)₂ are hydrogenated polydiene blocks;
A is a polyvinylaromatic block;
HT is a random copolymer segment composed of hydrogenated dienic and vinylaromatic monomer units;
X is a tri- or tetravalent coupling radical derived from a tri- or tetrachloro derivative of silicon, tin and germanium; and
n is an integer of from 3 to 4;
the above copolymer having a weight average molecular weight of from 60,000 to 500,000; an A block content of from 20 to 80% by weight; a [(EB)₁+(EB)₂] block content of from 20 to 80% by weight; a weight ratio of blocks (EB)₁ to blocks (EB)₂ of from 0.1 to 1.0; and a HT segment content of from 5 to 40% by weight,
comprising:
(a) polymerization, by means of the living polymer technique, of a mixture of diolefin and vinylaromatic monomer up to the complete, or almost complete, conversion of the monomers;
(b) addition of diene monomer to the copolymer obtained in step (a) and continuation of the polymerization up to the complete, or almost complete, conversion of the added diene monomer; and
(c) coupling of the living polymeric chains obtained in step (b) by means of a polyfunctional coupling agent; and
(d) hydrogenation of the diene units of the copolymer obtained in step (c) by means of catalytic hydrogenation.

2. Process according to claim 1, wherein the degree of hydrogenation of the diene units is not less than 80% and preferably ranges from 95 to 100%.

3. Process according to any one of claims 1 and 2, wherein the weight ratio of blocks (EB)₁ to blocks (EB)₂ ranges from 0.2 to 0.5 and the copolymeric segment HT content ranges from 10 to 30% by weight of the total block copolymer.

4. Process according to any one of claims 1 to 3, wherein block A is a polystyrene block and/or blocks (EB)₁ and (EB)₂ are hydrogenated polybutadiene blocks and/or segment HT is a random copolymer block of hydrogenated butadiene units and styrene units and/or X is =Si= or CH₃Si≡.

5. Process according to claim 1, wherein the polymerization steps are carried out in an aliphatic or cycloaliphatic organic solvent at a temperature of from 30 to 150°C and atmospheric or superatmospheric pressure in the presence of metal-alkyl and/or metal-aryl catalysts.

6. Process according to claim 5, wherein the solvent is n-hexane and/or cyclohexane, the reaction temperature ranges from 50 to 100°C, the catalyst is a C₃-C₇-alkyl-lithium and said catalyst is used in amounts of from 0.025 to 0.20 parts by weight per 100 parts by weight of the total monomers.

7. Process according to any one of claims 1 to 6, wherein the coupling step is carried out at a temperature of from 110 to 125°C in the presence of coupling agents selected from tri- and tetra-chloro derivatives of silicon, tin and germanium, and particularly is selected from SiCl₄ and CH₃SiCl₃.

8. Process according to any one of claims 1 to 7, wherein the hydrogenation is carried out, in the presence of a hydrogenation catalyst, under a hydrogen pressure of from 138 kPa to 7 MPa (20 to 1,000 psi) and at a temperature of from 30 to 200°C.

9. Process according to claim 8, wherein the hydrogenation is carried out under a hydrogen pressure of from 1 MPa to 4 MPa (150 and 600 psi), at a temperature of from 40 to 130°C and by using a catalyst obtained by contacting an aluminum alkyl compound with a nickel and/or cobalt compound.

10. Process according to any one of claims 1 to 9, wherein the diolefin is butadiene and the vinylaromatic monomer is styrene.

11. Branched and hydrogenated block copolymer of general formula (I):${\text{[(EB)}}_{\text{1}} {\text{-HT-A-(EB)}}_{\text{2}} {\text{]}}_{\text{n}} \text{X}$ wherein
(EB)₁ and (EB)₂ are hydrogenated polydiene blocks;
A is a polyvinylaromatic block;
HT is a random copolymer segment composed of hydrogenated dienic and vinylaromatic monomer units;
X is a tri- or tetravalent coupling radical derived from a tri- or tetrachloro derivative of silicon, tin and germanium; and
n is an integer of from 3 to 4;
the above copolymer having a weight average molecular weight of from 60,000 to 500,000; an A block content of from 20 to 80% by weight; a [(EB)₁+ (EB)₂] block content of from 20 to 80% by weight; a weight ratio of blocks (EB)₁ to blocks (EB)₂ of from 0.1 to 1.0; and a HT segment content of from 5 to 40% by weight.

12. Copolymer according to claim 11, wherein the degree of hydrogenation of the diene units is not less than 80% and preferably ranges from 95 to 100%.

13. Copolymer according to any one of claims 11 and 12, wherein the weight ratio of blocks (EB)₁ to blocks (EB)₂ ranges from 0.2 to 0.5 and the copolymeric segment HT content ranges from 10 to 30% by weight of the total block copolymer.

14. Copolymer according to any one of claims 11 to 13, wherein block A is a polystyrene block and/or blocks (EB)₁ and (EB)₂ are hydrogenated polybutadiene blocks and/or segment HT is a random copolymer block of hydrogenated butadiene units and styrene units and/or X is =Si= or CH₃Si≡.

## Patentansprüche (Patentansprüche für folgende(n) Vertragsstaat(en): AT, BE, CH, LI, DE, DK, FR, GB, GR, IT, LU, NL, SE)

1. Verzweigtes und hydriertes Blockcopolymer der allgemeinen Formel (I):${\text{[(EB)}}_{\text{1}} {\text{-HT-A-(EB)}}_{\text{2}} {\text{]}}_{\text{n}} \text{X}$ worin:
(EB)₁ und (EB)₂ hydrierte Polymerblöcke sind;
A ein polyvinylaromatischer Block ist;
HT ein statistisches Copolymersegment ist, gebildet aus hydrierten Dien-Monomereinheiten und vinylaromatischen Monomereinheiten;
X eine trivalente oder tetravalente Kupplungsgruppe bedeutet, abgeleitet von einem Tri- oder Tetrachlor-Derivat von Silicium, Zinn und Germanium; und
n eine ganze Zahl von 3 bis 4 ist;
wobei das obige Copolymer ein massengemitteltes Molekulargewicht von 60000 bis 500000 aufweist; einen Gehalt an Block A von 20 bis 80 Gew.-% hat; einen Gehalt an den Blöcken [(EB)₁+(EB)₂] von 20 bis 80 Gew.-% hat, ein Gewichtsverhältnis der Blöcke (EB)₁ zu den Blöcken (EB)₂ von 0,1 bis 1,0 aufweist und einen Gehalt an Segment HT von 5 bis 40 Gew.-% aufweist.

2. Copolymer gemäß Anspruch 1, bei dem der Grad der Hydrierung der Dien-Einheiten nicht weniger als 80% beträgt und vorzugsweise im Bereich von 95 bis 100% liegt.

3. Copolymer gemäß irgendeinem der Ansprüche 1 und 2, bei dem das Gewichtsverhältnis der Blöcke (EB)₁ zu den Blöcken (EB)₂ im Bereich von 0,2 bis 0,5 liegt und der Gehalt an Copolymersegment HT im Bereich von 10 bis 30 Gew.-% des gesamten Blockcopolymers liegt.

4. Copolymer gemäß irgendeinem der Ansprüche 1 bis 3, bei dem Block A ein Polystyrolblock ist und/oder die Blöcke (EB)₁ und (EB)₂ hydrierte Polybutadienblöcke sind und/oder das Segment HT ein statistischer Copolymerblock aus hydrierten Butadien- und Styroleinheiten ist und/oder X =Si= oder CH₃Si= bedeutet.

5. Verfahren zur Herstellung des Copolymers gemäß irgendeinem der Ansprüche 1 bis 4, welches umfaßt:
(a) Polymerisieren mittels der Methode der "lebenden Polymere" einer Mischung von Diolefin und vinylaromatischem Monomer bis zur vollständigen oder fast vollständigen Umsetzung der Monomere;
(b) Zugabe von Dienmonomer zu dem in Schritt (a) erhaltenen Copolymer und Fortsetzung der Polymerisation bis zur vollständigen oder fast vollständigen Umsetzung des zugegebenen Dienmonomers; und
(c) Kupplung der in Schritt (b) erhaltenen Ketten der "lebenden Polymere" mittels eines polyfunktionellen Kupplungsmittels; und
(d) Hydrierung der Dien-Einheiten des in Schritt (c) erhaltenen Copolymers mittels katalytischer Hydrierung.

6. Verfahren gemäß Anspruch 5, bei dem die Polymerisationsschritte in einem aliphatischen oder cycloaliphatischen organischen Lösungsmittel bei einer Temperatur von 30 bis 150°C und bei atmosphärischem Druck oder Überdruck in Anwesenheit von Metall-Alkyl- und/oder Metall-Aryl-Katalysatoren durchgeführt werden.

7. Verfahren gemäß Anspruch 6, bei dem das Lösungsmittel n-Hexan und/oder Cyclohexan ist, die Reaktionstemperatur im Bereich von 50 bis 100°C liegt, der Katalysator eine C₃-C₇-Alkyl-Lithium-Verbindung ist und der besagte Katalysator in Mengen von 0,025 bis 0,20 Gew.-Teilen pro 100 Gew.-Teilen der gesamten Monomere verwendet wird.

8. Verfahren gemäß irgendeinem der Ansprüche 5 bis 7, bei dem der Kupplungsschritt bei einer Temperatur von 100 bis 125°C in Anwesenheit von Kupplungsmitteln, ausgewählt aus Tri- und Tetrachlor-Derivaten von Silicium, Zinn und Germanium, insbesondere ausgewählt aus SiCl₄ und CH₃SiCl₃, durchgeführt wird.

9. Verfahren gemäß irgendeinem der Ansprüche 5 bis 8, bei dem die Hydrierung in Gegenwart eines Hydrierungskatalysators bei einem Wasserstoffdruck von 138 kPa bis 7 MPa (20 bis 1000 psi) und einer Temperatur von 30 bis 200°C durchgeführt wird.

10. Verfahren gemäß Anspruch 9, bei dem die Hydrierung bei einem Wasserstoffdruck von 1 MPa bis 4 MPa (150 bis 600 psi) und einer Temperatur von 40 bis 130°C unter Verwendung eines Katalysators durchgeführt wird, welcher durch In-Berührung-Bringen einer Aluminium-Alkyl-Verbindung mit einer Nickel- und/oder Kobalt-Verbindung erhalten wurde.

11. Verfahren gemäß irgendeinem der Ansprüche 5 bis 10, bei dem das Diolefin Butadien und das vinylaromatische Monomer Styrol ist.

## Patentansprüche (Patentansprüche für folgende(n) Vertragsstaat(en): ES)

1. Verfahren zur Herstellung eines verzweigten und hydrierten Blockcopolymers der allgemeinen Formel (I):${\text{[(EB)}}_{\text{1}} {\text{-HT-A-(EB)}}_{\text{2}} {\text{]}}_{\text{n}} \text{X}$ worin:
(EB)₁ und (EB)₂ hydrierte Polymerblöcke sind;
A ein polyvinylaromatischer Block ist;
HT ein statistisches Copolymersegment ist, gebildet aus hydrierten Dien-Monomereinheiten und vinylaromatischen Monomereinheiten;
X eine trivalente oder tetravalente Kupplungsgruppe bedeutet, abgeleitet von einem Tri- oder Tetrachlor-Derivat von Silicium, Zinn und Germanium; und
n eine ganze Zahl von 3 bis 4 ist;
wobei das obige Copolymer ein massengemitteltes Molekulargewicht von 60000 bis 500000 aufweist; einen Gehalt an Block A von 20 bis 80 Gew.-% hat; einen Gehalt an den Blöcken [(EB)₁+(EB)₂] von 20 bis 80 Gew.-% hat, ein Gewichtsverhältnis der Blöcke (EB)₁ zu den Blöcken (EB)₂ von 0,1 bis 1,0 aufweist und einen Gehalt an Segment HT von 5 bis 40 Gew.-% aufweist, welches umfaßt:
(a) Polymerisieren mittels der Methode der "lebenden Polymere" einer Mischung von Diolefin und vinylaromatischem Monomer bis zur vollständigen oder fast vollständigen Umsetzung der Monomere;
(b) Zugabe von Dienmonomer zu dem in Schritt (a) erhaltenen Copolymer und Fortsetzung der Polymerisation bis zur vollständigen oder fast vollständigen Umsetzung des zugegebenen Dienmonomers; und
(c) Kupplung der in Schritt (b) erhaltenen Ketten der "lebenden Polymere" mittels eines polyfunktionellen Kupplungsmittels; und
(d) Hydrierung der Dien-Einheiten des in Schritt (c) erhaltenen Copolymers mittels katalytischer Hydrierung.

2. Verfahren gemäß Anspruch 1, bei dem der Grad der Hydrierung der Dien-Einheiten nicht weniger als 80% beträgt und vorzugsweise im Bereich von 95 bis 100% liegt.

3. Verfahren gemäß irgendeinem der Ansprüche 1 und 2, bei dem das Gewichtsverhältnis der Blöcke (EB)₁ zu den Blöcken (EB)₂ im Bereich von 0,2 bis 0,5 liegt und der Gehalt an Copolymersegment HT im Bereich von 10 bis 30 Gew.-% des gesamten Blockcopolymers liegt.

4. Verfahren gemäß irgendeinem der Ansprüche 1 bis 3, bei dem Block A ein Polystyrolblock ist und/oder die Blöcke (EB)₁ und (EB)₂ hydrierte Polybutadienblöcke sind und/oder das Segment HT ein statistischer Copolymerblock aus hydrierten Butadien- und Styroleinheiten ist und/oder X =Si= oder CH₃Si≡ bedeutet.

5. Verfahren gemäß Anspruch 1, bei dem die Polymerisationsschritte in einem aliphatischen oder cycloaliphatischen organischen Lösungsmittel bei einer Temperatur von 30 bis 150°C und bei atmosphärischem Druck oder Überdruck in Anwesenheit von Metall-Alkyl- und/oder Metall-Aryl-Katalysatoren durchgeführt werden.

6. Verfahren gemäß Anspruch 5, bei dem das Lösungsmittel n-Hexan und/oder Cyclohexan ist, die Reaktionstemperatur im Bereich von 50 bis 100°C liegt, der Katalysator eine C₃-C₇-Alkyl-Lithium-Verbindung ist und der besagte Katalysator in Mengen von 0,025 bis 0,20 Gew.-Teilen pro 100 Gew.-Teilen der gesamten Monomere verwendet wird.

7. Verfahren gemäß irgendeinem der Ansprüche 1 bis 6, bei dem der Kupplungsschritt bei einer Temperatur von 100 bis 125°C in Anwesenheit von Kupplungsmitteln, ausgewählt aus Tri- und Tetrachlor-Derivaten von Silicium, Zinn und Germanium, insbesondere ausgewählt aus SiCl₄ und CH₃SiCl₃, durchgeführt wird.

8. Verfahren gemäß irgendeinem der Ansprüche 1 bis 7, bei dem die Hydrierung in Gegenwart eines Hydrierungskatalysators bei einem Wasserstoffdruck von 138 kPa bis 7 MPa (20 bis 1000 psi) und einer Temperatur von 30 bis 200°C durchgeführt wird.

9. Verfahren gemäß Anspruch 8, bei dem die Hydrierung bei einem Wasserstoffdruck von 1 MPa bis 4 MPa (150 bis 600 psi) und einer Temperatur von 40 bis 130°C unter Verwendung eines Katalysators durchgeführt wird, welcher durch In-Berührung-Bringen einer Aluminium-Alkyl-Verbindung mit einer Nickel- und/oder Kobalt-Verbindung erhalten wurde.

10. Verfahren gemäß irgendeinem der Ansprüche 1 bis 9, bei dem das Diolefin Butadien und das vinylaromatische Monomer Styrol ist.

11. Verzweigtes und hydriertes Blockcopolymer der allgemeinen Formel (I):${\text{[(EB)}}_{\text{1}} {\text{-HT-A-(EB)}}_{\text{2}} {\text{]}}_{\text{n}} \text{X}$ worin:
(EB)₁ und (EB)₂ hydrierte Polymerblöcke sind;
A ein polyvinylaromatischer Block ist;
HT ein statistisches Copolymersegment ist, gebildet aus hydrierten Dien-Monomereinheiten und vinylaromatischen Monomereinheiten;
X eine trivalente oder tetravalente Kupplungsgruppe bedeutet, abgeleitet von einem Tri- oder Tetrachlor-Derivat von Silicium, Zinn und Germanium; und
n eine ganze Zahl von 3 bis 4 ist;
wobei das obige Copolymer ein massengemitteltes Molekulargewicht von 60000 bis 500000 aufweist; einen Gehalt an Block A von 20 bis 80 Gew.-% hat; einen Gehalt an den Blöcken [(EB)₁+(EB)₂] von 20 bis 80 Gew.-% hat, ein Gewichtsverhältnis der Blöcke (EB)₁ zu den Blöcken (EB)₂ von 0,1 bis 1,0 aufweist und einen Gehalt an Segment HT von 5 bis 40 Gew.-% aufweist.

12. Copolymer gemäß Anspruch 11, bei dem der Grad der Hydrierung der Dien-Einheiten nicht weniger als 80% beträgt und vorzugsweise im Bereich von 95 bis 100% liegt.

13. Copolymer gemäß irgendeinem der Ansprüche 11 und 12, bei dem das Gewichtsverhältnis der Blöcke (EB)₁ zu den Blöcken (EB)₂ im Bereich von 0,2 bis 0,5 liegt und der Gehalt an Copolymersegment HT im Bereich von 10 bis 30 Gew.-% des gesamten Blockcopolymers liegt.

14. Copolymer gemäß irgendeinem der Ansprüche 11 bis 13, bei dem Block A ein Polystyrolblock ist und/oder die Blöcke (EB)₁ und (EB)₂ hydrierte Polybutadienblöcke sind und/oder das Segment HT ein statistischer Copolymerblock aus hydrierten Butadien- und Styroleinheiten ist und/oder X =Si= oder CH₃Si≡ bedeutet.

## Revendications (Revendications pour l'(les) Etat(s) contractant(s) suivant(s): AT, BE, CH, LI, DE, DK, FR, GB, GR, IT, LU, NL, SE)

1. Copolymère à blocs hydrogéné et ramifié répondant à la formule générale (I) :${\text{[(EB)}}_{\text{1}} {\text{-HT-A-(EB)}}_{\text{2}} {\text{]}}_{\text{n}} \text{X}$ dans laquelle
(EB)₁ et (EB)₂ représentent des blocs de polydiène hydrogéné ;
A représente un bloc polyvinylaromatique ;
HT représente un segment de copolymère statistique composé de motifs monomères vinyl-aromatiques et diéniques hydrogénés ;
X représente un radical de couplage trivalent ou tétravalent dérivé d'un dérivé de silicium, d'étain et de germanium, trichloré ou tétrachloré ; et
n représente un nombre entier compris entre 3 et 4 ;
le copolymère ci-dessus présentant une masse moléculaire moyenne en poids comprise entre 60 000 et 500 000 ; une teneur en bloc A comprise entre 20 et 80 % en poids ; une teneur en bloc [(EB)₁ + (EB)₂] comprise entre 20 et 80 % en poids ; un rapport pondéral des blocs (EB)₁ aux blocs (EB)₂ compris entre 0,1 et 1,0 ; et une teneur en segment HT comprise entre 5 et 40 % en poids.

2. Copolymère conforme à la revendication 1, dans lequel le degré d'hydrogénation des motifs diéniques n'est pas inférieur à 80 % et se situe de préférence dans l'intervalle allant de 95 à 100 %.

3. Copolymère conforme à l'une quelconque des revendications 1 et 2, dans lequel le rapport pondéral des blocs (EB)₁ aux blocs (EB)₂ est compris entre 0,2 et 0,5, et la teneur en segment HT copolymérique se situe dans l'intervalle allant de 10 à 30 % en poids du copolymère à blocs total.

4. Copolymère conforme à l'une quelconque des revendications 1 à 3, dans lequel le bloc A représente un bloc de polystyrène et/ou les blocs (EB)₁ et (EB)₂ sont des blocs de polybutadiène hydrogéné et/ou le segment HT est un bloc de copolymère statistique comportant des motifs butadiéniques hydrogénés et des motifs styréniques, et/ou X représente =Si= ou CH₃Si≡.

5. Procédé pour préparer le copolymère conforme à l'une quelconque des revendications 1 à 4, comprenant :
(a) la polymérisation, utilisant la technique du polymère vivant, d'un mélange de dioléfine et de monomère vinyl-aromatique jusqu'à la conversion totale ou presque totale des monomères ;
(b) l'addition d'un monomère diénique au copolymère obtenu dans l'étape (a) et poursuite de la polymérisation jusqu'à la conversion totale ou presque totale du monomère diénique ajouté ; et
(c) le couplage des chaînes polymériques vivantes obtenues dans l'étape (b) au moyen d'un agent de couplage polyfonctionnel ; et
(d) l'hydrogénation des motifs diéniques du copolymère obtenu dans l'étape (c) au moyen d'une hydrogénation catalytique.

6. Procédé conforme à la revendication 5, dans lequel on effectue les étapes de polymérisation dans un solvant organique aliphatique ou cycloaliphatique à une température comprise entre 30 et 150° C et sous une pression atmosphérique ou supérieure à la pression atmosphérique, en présence de catalyseurs de type métal alkylé et/ou métal arylé.

7. Procédé conforme à la revendication 6, dans lequel le solvant est le n-hexane et/ou le cyclohexane, la température réactionnelle se situe dans l'intervalle allant de 50 à 100° C, le catalyseur est un (alkyl en C₃-C₇)lithium, et ledit catalyseur est utilisé en des quantités comprises entre 0,025 et 0,20 partie en poids pour 100 parties en poids de monomères totaux.

8. Procédé conforme à l'une quelconque des revendications 5 à 7, dans lequel on effectue l'étape de couplage à une température comprise entre 110 et 125° C en présence d'agents de couplage choisis parmi les dérivés de silicium, d'étain et de germanium, trichlorés et tétrachlorés, et en particulier choisis parmi SiCl₄ et CH₃SiCl₃.

9. Procédé conforme à l'une quelconque des revendications 5 à 8, dans lequel on effectue l'hydrogénation en présence d'un catalyseur d'hydrogénation, sous une pression d'hydrogène comprise entre 138 kPa et 7 MPa (20 et 1000 psi) et à une température de 30 à 200° C.

10. Procédé conforme à la revendication 9, dans lequel on effectue l'hydrogénation sous une pression d'hydrogène comprise entre 1 MPa et 4 MPa (150 et 600 psi) à une température de 40 à 130° C et en utilisant un catalyseur obtenu en mettant un composé de type alkyl-aluminium en contact avec un composé de nickel et/ou de cobalt.

11. Procédé conforme à l'une quelconque des revendications 5 à 10, dans lequel la dioléfine est le butadiène et le monomère vinyl-aromatique est le styrène.

## Revendications (Revendications pour l'(les) Etat(s) contractant(s) suivant(s): ES)

1. Procédé pour préparer un copolymère à blocs hydrogéné et ramifié répondant à la formule générale (I) :${\text{[(EB)}}_{\text{1}} {\text{-HT-A-(EB)}}_{\text{2}} {\text{]}}_{\text{n}} \text{X}$ dans laquelle
(EB)₁ et (EB)₂ représentent des blocs de polydiène hydrogéné ;
A représente un bloc polyvinylaromatique ;
HT représente un segment de copolymère statistique composé de motifs monomères vinyl-aromatiques et diéniques hydrogénés ;
X représente un radical de couplage trivalent ou tétravalent dérivé d'un dérivé de silicium, d'étain et de germanium, trichloré ou tétrachloré ; et
n représente un nombre entier compris entre 3 et 4 ;
le copolymère ci-dessus présentant une masse moléculaire moyenne en poids comprise entre 60 000 et 500 000 ; une teneur en bloc A comprise entre 20 et 80 % en poids ; une teneur en bloc [(EB)₁ + (EB)₂] comprise entre 20 et 80 % en poids ; un rapport pondéral des blocs (EB)₁ aux blocs (EB)₂ compris entre 0,1 et 1,0 ; et une teneur en segment HT comprise entre 5 et 40 % en poids, comprenant :
(a) la polymérisation, utilisant la technique du polymère vivant, d'un mélange de dioléfine et de monomère vinyl-aromatique jusqu'à la conversion totale ou presque totale des monomères ;
(b) l'addition d'un monomère diénique au copolymère obtenu dans l'étape (a) et poursuite de la polymérisation jusqu'à la conversion totale ou presque totale du monomère diénique ajouté ; et
(c) le couplage des chaînes polymériques vivantes obtenues dans l'étape (b) au moyen d'un agent de couplage polyfonctionnel ; et
(d) l'hydrogénation des motifs diéniques du copolymère obtenu dans l'étape (c) au moyen d'une hydrogénation catalytique.

2. Procédé conforme à la revendication 1, dans lequel le degré d'hydrogénation des motifs diéniques n'est pas inférieur à 80 % et se situe de préférence dans l'intervalle allant de 95 à 100 %.

3. Procédé conforme à l'une quelconque des revendications 1 et 2, dans lequel le rapport pondéral des blocs (EB)₁ aux blocs (EB)₂ est compris entre 0,2 et 0,5, et la teneur en segment HT copolymérique se situe dans l'intervalle allant de 10 à 30 % en poids du copolymère à blocs total.

4. Procédé conforme à l'une quelconque des revendications 1 à 3, dans lequel le bloc A représente un bloc de polystyrène et/ou les blocs (EB)₁ et (EB)₂ sont des blocs de polybutadiène hydrogéné et/ou le segment HT est un bloc de copolymère statistique comportant des motifs butadiéniques hydrogénés et des motifs styréniques, et/ou X représente =Si= ou CH₃Si≡.

5. Procédé conforme à la revendication 1, dans lequel on effectue les étapes de polymérisation dans un solvant organique aliphatique ou cycloaliphatique à une température comprise entre 30 et 150° C et sous une pression atmosphérique ou supérieure à la pression atmosphérique, en présence de catalyseurs de type métal alkylé et/ou métal arylé.

6. Procédé conforme à la revendication 5, dans lequel le solvant est le n-hexane et/ou le cyclohexane, la température réactionnelle se situe dans l'intervalle allant de 50 à 100° C, le catalyseur est un (alkyl en C₃-C₇)lithium, et ledit catalyseur est utilisé en des quantités comprises entre 0,025 et 0,20 partie en poids pour 100 parties en poids de monomères totaux.

7. Procédé conforme à l'une quelconque des revendications 1 à 6, dans lequel on effectue l'étape de couplage à une température comprise entre 110 et 125° C en présence d'agents de couplage choisis parmi les dérivés de silicium, d'étain et de germanium, trichlorés et tétrachlorés, et en particulier choisis parmi SiCl₄ et CH₃SiCl₃.

8. Procédé conforme à l'une quelconque des revendications 1 à 7, dans lequel on effectue l'hydrogénation en présence d'un catalyseur d'hydrogénation, sous une pression d'hydrogène comprise entre 138 kPa et 7 MPa (20 et 1000 psi) et à une température de 30 à 200° C.

9. Procédé conforme à la revendication 8, dans lequel on effectue l'hydrogénation sous une pression d'hydrogène comprise entre 1 MPa et 4 MPa (150 et 600 psi) à une température de 40 à 130° C et en utilisant un catalyseur obtenu en mettant un composé de type alkyl-aluminium en contact avec un composé de nickel et/ou de cobalt.

10. Procédé conforme à l'une quelconque des revendications 1 à 9, dans lequel la dioléfine est le butadiène et le monomère vinyl-aromatique est le styrène.

11. Copolymère à blocs hydrogéné et ramifié répondant à la formule générale (I) :${\text{[(EB)}}_{\text{1}} {\text{-HT-A-(EB)}}_{\text{2}} {\text{]}}_{\text{n}} \text{X}$ dans laquelle
(EB)₁ et (EB)₂ représentent des blocs de polydiène hydrogéné ;
A représente un bloc polyvinylaromatique ;
HT représente un segment de copolymère statistique composé de motifs monomères vinyl-aromatiques et diéniques hydrogénés ;
X représente un radical de couplage trivalent ou tétravalent dérivé d'un dérivé de silicium, d'étain et de germanium, trichloré ou tétrachloré ; et
n représente un nombre entier compris entre 3 et 4 ;
le copolymère ci-dessus présentant une masse moléculaire moyenne en poids comprise entre 60 000 et 500 000 ; une teneur en bloc A comprise entre 20 et 80 % en poids ; une teneur en bloc [(EB)₁ + (EB)₂] comprise entre 20 et 80 % en poids ; un rapport pondéral des blocs (EB)₁ aux blocs (EB)₂ compris entre 0,1 et 1,0 ; et une teneur en segment HT comprise entre 5 et 40 % en poids.

12. Copolymère conforme à la revendication 11, dans lequel le degré d'hydrogénation des motifs diéniques n'est pas inférieur à 80 % et se situe de préférence dans l'intervalle allant de 95 à 100 %.

13. Copolymère conforme à l'une quelconque des revendications 11 et 12, dans lequel le rapport pondéral des blocs (EB)₁ aux blocs (EB)₂ est compris entre 0,2 et 0,5, et la teneur en segment HT copolymérique se situe dans l'intervalle allant de 10 à 30 % en poids du copolymère à blocs total.

14. Copolymère conforme à l'une quelconque des revendications 11 à 13, dans lequel le bloc A représente un bloc de polystyrène et/ou les blocs (EB)₁ et (EB)₂ sont des blocs de polybutadiène hydrogéné et/ou le segment HT est un bloc de copolymère statistique comportant des motifs butadiéniques hydrogénés et des motifs styréniques, et/ou X représente =Si= ou CH₃Si≡.
